# EUROPEAN PATENT SPECIFICATION

(11) **EP 3 473 364 B1**
(45) Date of publication and mention of the grant of the patent: **29.07.2020**
(21) Application number: 18200694.0
(22) Date of filing: 16.10.2018
(51) Int. Cl.: B23D 61/02, B23D 61/04, B27B 33/02

(54) **SAW BLADE WITH CUTTING TIPS**
SÄGEBLATT MIT SCHNITTSPITZEN
LAME DE SCIE AVEC INSERTS DE COUPE

(30) Priority: 23.10.2017 JP 2017204679
(43) Date of publication of application: 24.04.2019
(73) Proprietor: Kanefusa Kabushiki Kaisha, Niwa-gun, Aichi 480-0192 (JP)
(72) Inventor: TSUCHIYA, Atsushi, Niwa-gun, Aichi 480-0192 (JP)
(74) Representative: Maikowski & Ninnemann Patentanwälte Partnerschaft mbB

(56) References cited:
- EP-A1- 3 195 971
- WO-A1-99/44797
- US-A- 4 106 382
- US-A- 4 516 560
- US-A1- 2003 041 694
- US-B1- 6 708 594

## Description

The present invention relates to a tipped saw blade according to the preamble of claim 1 for cutting, for example, wood, a wooden board, ceramic material, and the like.

Such a tipped saw blade is known from WO99/44797A1.

A tipped saw blade disclosed in Japanese-Laid Open Patent Publication No. 10-71522 is used for cutting a wooden board such as a particleboard or a medium density fiber board (MDF) or the like. A surface of the wooden board may be decoratively coated with high-pressure melamine resin, low-pressure melamine resin, paper, olefin resin, thin plate, etc. Wooden boards may contain adhesive such as synthetic resin to bond small pieces of wood or wood chips to each other under pressure.

The tipped saw blade includes a disc-shaped base metal and a plurality of edge metals (cutting tips) joined around an outer periphery of the base metal. For example, a tipped saw blade for performing a cutting work on a wooden board or the like includes cutting tips made of cemented carbide or sintered polycrystalline diamond (PCD). As another example, a tipped saw blade for cutting a wooden board or the like includes cutting tips made of cemented carbide or sintered polycrystalline diamond (PCD). The cutting tips in such blades are joined on the base metal with their rake faces substantially oriented in the circumferential direction of the base metal, coinciding with the tangent to that point. Cutting edges of the cutting tips corresponding to end portions of the rake faces abut workpieces such as wooden boards or the like. In this condition, the cutting tips are moved along the abutting surface of the workpiece. As a result, the abutting surface of the workpiece is cut by the cutting edges of the cutting tips. The tipped saw blade is rotated about an axis extending through the radial center of the disc-shaped base metal. Consequently, a plurality of the cutting edges of the cutting tips repeatedly cut the workpiece. As a result, the workpiece can be cut by the tipped saw blade.

Resin contained in wood, saw dust, decorative materials, adhesive, and the like may adhere to the cutting tips and the base metal when cutting a wooden board by the tipped saw blade. The adhered substances such as resin from the materials and/or saw dust may deteriorate a cut face and may cause the friction coefficient of the tipped saw blade to increase with respect to a workpiece, leading to increase in power consumption. The tipped saw blade must be replaced when such a phenomenon occurs.

When the cutting tips of the tipped saw blade are sintered PCDs, the tipped saw blade may exhibit high wear resistance and long lifetime. However, even when abrasion on the cutting edges is low, the tipped saw blade still needs to be replaced if resin and/or saw dust etc. adhered to the base metal. As a result, the advantage of using the cutting tips with high wear resistance may be pointless. Therefore, in order to extend a lifetime of a tipped saw blade, it is required to not only reduce the friction coefficient of the tipped saw blade with respect to a potential workpiece, but also to reduce resin or saw dust adherence to the tipped saw blade.

According to the present invention, a tipped saw blade includes a disc-shaped base metal, and a plurality of cutting tips that are joined around the outer periphery of the base metal. The base metal includes a plurality of grooves extending on its surface radially in a curved manner. Each of the cutting tips include a rake face that has a surface roughness Rz of 1 to 3.4 µm.

When the tipped saw blade is rotated about an axis extending through the radial center of the base metal to cut a workpiece, the surfaces of the base metal may come in contact with the cut face of the workpiece. However, to prevent this situation from occurring, a plurality of grooves are provided on the outer radius of the base metal. Therefore, when a cutting operation is performed on a workpiece, while the tipped saw blade is rotated, the cut face of the workpiece may be distanced from the base metal, by the grooves, such that the cut face does not continuously come in contact with the base metal. Thus, the friction coefficient of the base metal with respect to the workpiece can be reduced, and additionally the resin and saw dust adherence to the base metal can also be reduced. In addition, the grooves extend radially outward in a curved manner. As a result, the grooves are not directed toward the workpiece in a direction orthogonal to the rotation direction. In particular, at least the entire lengths of the grooves are not directed toward the workpiece in the orthogonal direction at one time, due to the curved nature of the groove. As a result, the tipped saw blade may receive the force from the cut face in an evenly-distributed manner in the circumferential direction. Further, the surface roughness Rz of the rake face of the cutting tips is provided to have a greater roughness than that of the conventional tips, wherein the surface roughness Rz is 1 to 3.4 µm. Therefore, the friction coefficient of the rake face with respect to the workpiece can further be reduced. In this way, it is possible to reduce cutting resistance at the rake faces and reduce the resin or saw dust adherence to the rake faces. Consequently, the lifetime of the tipped saw blade can be extended in a plurality of ways.

According to another aspect of the present disclosure, the tipped saw blade includes a base metal that has a plurality of radially outward extending curved grooves on its surface and has a surface roughness Rz of 3 to 15µm. The plurality of grooves includes circular-arc first grooves with their center located on one side of the circumferential direction of the base metal with respect to a radial line of the base metal, and circular-arcs second grooves with their center located on another side with respect to a radial line of the base metal of the base metal. The first grooves and the second grooves intersect with each other. Therefore, the contact area of the cut face with the base metal is reduced such that the friction coefficient of the base metal with respect to the workpiece can likewise be reduced. Further, the circular-arcs defined by the first and second grooves are curved in opposite directions since their respective centers are located in the direction opposite to the circumferential direction with respect to a radial line of the base meal. Therefore, the tipped saw blade may, for example, be formed with the similar first and second grooves on both sides of the base metal. Alternatively, even when the rotational direction is reversed, the similar groove effect may be achieved. In this way, the directivity of the tipped saw blade 1 can be prevented. Furthermore, since both of the first and second grooves are formed in a circular-arc shape, they can be formed with a disc-shaped grinding stone, respectively. By this way, the first and second grooves can be easily formed.

According to another aspect of the present disclosure, the cutting tips joined to the tipped saw blade are made of sintered polycrystalline diamond (PCD). Therefore, the cutting tips exhibit high abrasion resistance and the cutting edges are less liable to wear. As a result, the lifetime of the tipped saw blade can be extended. In addition, since the rake faces of the tipped edges are made to be rough, resin is prevented from adhering on the tipped edges. Thus, the lifetime of the tipped saw blade can be extended due to these multiple synergistic effects.

Additional objects, features, and advantages, of the present invention will be readily understood after reading the following detailed description together with the claims and the accompanying drawings, in which:
FIG. 1 is a perspective view of a tipped saw blade according to the present embodiment.
FIG. 2 is a right side view of the tipped saw blade.
FIG. 3 is a left side view of the tipped saw blade.
FIG. 4 is a partially enlarged perspective view of the tipped saw blade.
FIG. 5 is a partially enlarged right side view of the tipped saw blade.
FIG. 6 is a table showing measured results of surface roughness of rake faces of cutting tips and friction coefficients of the rake faces with respect to a workpiece.
FIG. 7 is a diagram showing a comparison of power consumptions for cutting of tipped saw blades having cutting tips with different surface roughness degrees of rake faces.
FIG. 8 is a diagram showing a relation among the surface roughness degrees of the rake faces of the cutting tips, the friction coefficient of the rake faces with respect to the workpiece and radii of cutting edges.
FIG. 9 is a table showing measured results of the surface roughness degrees of main bodies of base metals having different shapes of polishing traces and the friction coefficients of the main bodies of the base metals with respect to the workpiece.
FIG. 10 is a diagram showing temporal change in the measured results of the degrees of surface roughness of the main bodies of the base metals having the different shapes of the polishing traces and the friction coefficients of the main bodies of the base metals with respect to the workpiece.

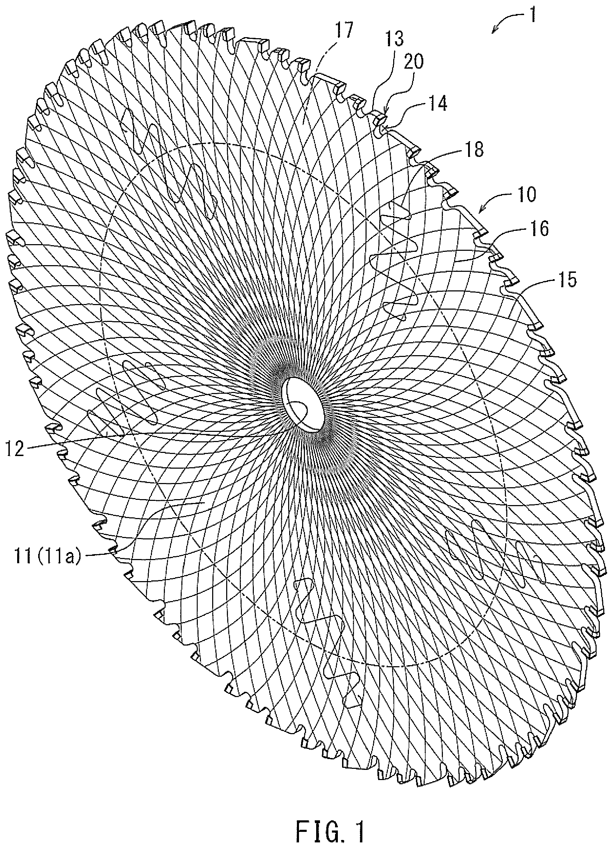

Hereinafter, one exemplary embodiment according to the present invention will be described with reference to FIGS. 1 to 10. As shown in FIGS. 1 to 3, a tipped saw blade 1 includes a disc-shaped base metal 10, and a plurality of the cutting tips 20 bonded around the outer periphery of the base metal 10. The base metal 10 includes a disc-shaped main body 11 and a plurality of tooth bodies 13 projecting radially outward, for example in a curved manner, from the outer periphery of the main body 11. The base metal 10 includes an attachment hole 12 at the radial center of the main body 11. A rotary shaft of a circular saw machine is inserted into the attachment hole 12.

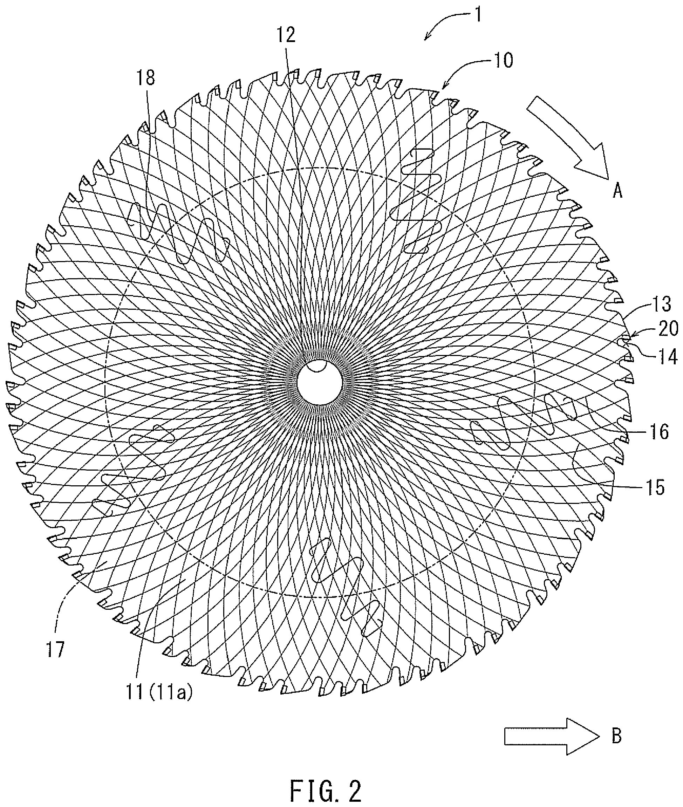

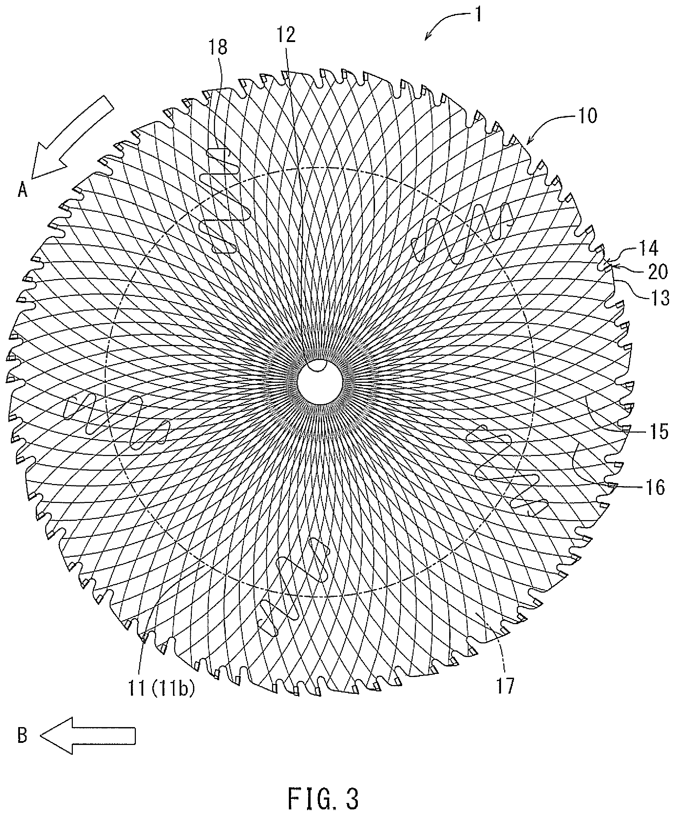

The circular saw machine includes a motor configured to rotate the rotary shaft about its longitudinal axis. The motor in turn rotates the tipped saw blade 1 along with the rotary shaft in the A-direction, in a circular manner about the radial center of the main body 11 as indicated in FIGS. 2 and 3. The workpiece or the tipped saw blade is moved so that the tipped saw blade can be driven forward by a user or a machine relative to the workpiece in B-direction when the workpiece is cut. Hereinafter, the cutting proceeding direction, which is the B-direction, is determined as a front side. The right side surface of the main body 11 from the user's point of view, relative to the forward cutting proceeding direction is determined as a right side face 11a, and similarly the left side surface of the main body from the user's point of view, relative to the forward cutting proceeding direction is determined as the left side face 11b.

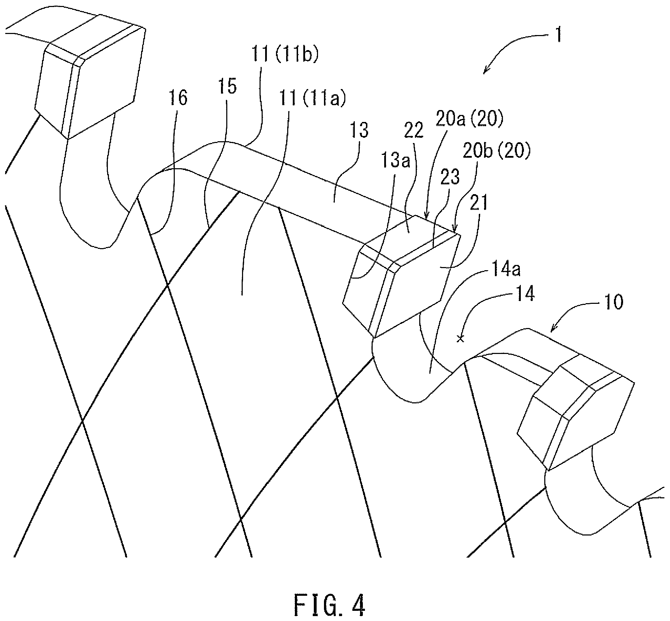

As shown in FIGS. 2 and 3, a plurality of the tooth bodies 13 may be arranged around the outer periphery of the main body 11 at random intervals or at predetermined intervals. Gullets 14 are formed at the troughs between the tooth bodies 13. As shown in FIG. 4, the width of the gullet 14 is reduced as the base metal 10 is traversed from the outer radial portion to its inner radial portion, to thereby form a gullet bottom 14a. Each recess 13a is formed at the leading radial end and circumferential one edge (forward edge in a rotational direction) of each tooth body 13. The each recess 13a opens to the radially outer side and circumferential one side (in a rotational direction). Each cutting tip 20 is bonded into a corresponding recess 13a.

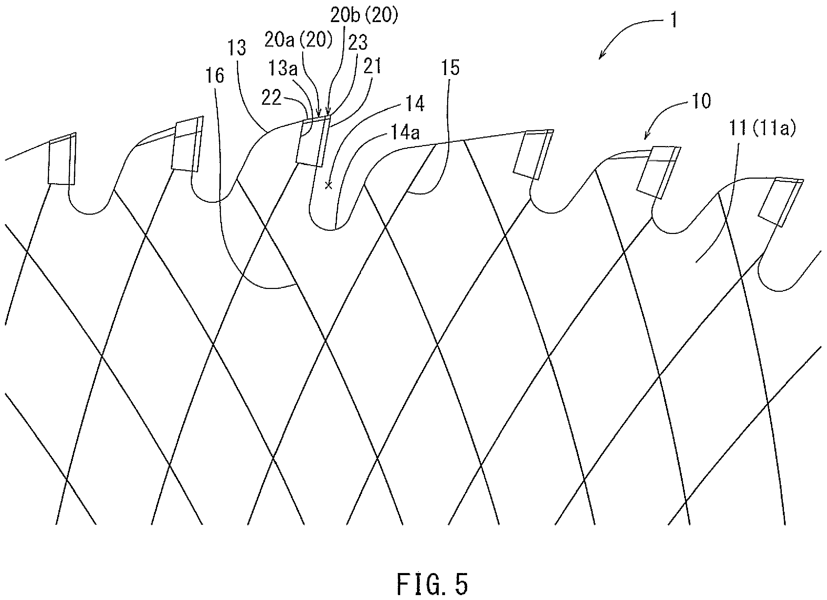

As shown in FIGS. 4 and 5, the cutting tip 20 includes a substantially rectangular parallelepiped tip body 20a, and a thin plate-like tip end 20b, which is bonded on the one non-bonded, outward facing circumferential face of the tip body 20a. The tip bodies 20a are made of, for example, cemented carbide and the tip ends 20b are made of, for example, sintered polycrystalline diamond (PCD). Each of the cutting tips 20 includes a rake face 21 on one circumferential side and a flank face 22 on the outermost radial side. A cutting edge 23 is formed at the edge parallel to the thickness direction of the blade 1 where the rake face 21 and the flank face 22 intersect. The rake faces 21 and the cutting edges 23 are formed of sintered polycrystalline diamond (PCD). The rest of the parts of the cutting tips 20 are made of cemented carbide. The cutting tips 20 with their cemented carbide parts are jointed in the recesses 13a, for example, by brazing in such a posture that the flank faces 22 are oriented outward in a radial direction of the base metal 10. The cutting tips 20 project outward from the recesses 13a in the radial direction and the circumferential-A direction, and rake faces 21 are located at front positions of the recesses 13a in the circumferential-A direction. The rake faces 21 are slightly tilted to radially align with the center of the base metal 10 with respect to the diameter of the base metal 10.

As shown in FIG. 4, the cutting edges 23 are located at the radial leading ends of the tipped saw blade 1. When cutting a workpiece such as a wooden board, the cutting edges 23 come into contact with the workpiece to cut the workpiece. The plurality of the cutting tips 20 successively cut the workpiece by rotating the tipped saw blade 1 about the center of the disc of the base metal 10. As a result, the workpiece can be cut by the tipped saw blade 1.

As shown in FIGS. 2 and 3, the right side face 11a and the left side face 11b include a plurality of first grooves 15 and a plurality of second grooves 16 radially extending from the center of the main body 11 toward the outer radial periphery. The first grooves 15 and the second grooves 16 are, for example, formed in a circular-arc shape, and may curve in the direction opposite to the circumferential direction. The plurality of the first grooves 15 may be arranged at substantially equal angular intervals in the circumferential direction about the radial center of the main body 11. The plurality of the second grooves 16 may be arranged at substantially equal angular intervals in the circumferential direction about the center of the main body 11. The interval between the first grooves 15 and the interval between the second grooves 16 may also be substantially equal.

As shown in FIGS. 2 and 3, the first grooves 15 and the second grooves 16 extend from the center of the main body 11 toward the outer periphery and curve in the circumferential direction. The first grooves 15 curve in a first circumferential direction while the second grooves 16 curve in a second circumferential direction that is opposite to the first circumferential direction such that the first grooves 15 and the second grooves 16 intersect each other. The first grooves 15 and the second grooves 16 extend in the radial direction of the base metal 10 from the attachment hole 12. The first grooves 15 extend to the outer circumferential edge of the base metal 10 with a first circumferential curvature. Outer ends of the first grooves 15 extend substantially parallel to or along to the rake faces 21. The second grooves 16 extend to the outer circumferential edge of the base metal 10 with a second circumferential curvature. The second circumferential curvature is in opposite direction of the first circumferential curvature, relative to the radial length from the radial center of the attachment hole 12 to the associated rake face 21 with the first circumferential curvature. The degree of the second circumferential curvature is the same as that of the first circumferential curvature.

As shown in FIG. 2, the first grooves 15 on the right side face 11a may curve so as to form a circular-arc in a clockwise direction from the inner peripheral edge of the main body 11 of the base metal 10 toward the outer peripheral edge. The second grooves 16 on the right side face 11a may curve so as to form a circular-arc in a counterclockwise direction from the inner peripheral edge of the main body 11 toward the outer peripheral edge. As shown in FIG. 3, the first grooves 15 on the left side face 11b curve, in a manner opposite to that of the right side face 11a, are arranged so as to form a circular-arc in a counterclockwise direction from the inner peripheral edge of the main body 11 toward the outer peripheral edge. The second grooves 16 on the left side face 11b likewise curve so as to form a circular-arc in a clockwise direction from the inner peripheral edge of the main body 11 toward the outer peripheral edge. The first grooves 15 and the second grooves 16 intersect with each other on both the right side face 11a and left side face 11b and form lattice shaped patterns.

The first grooves 15 and the second grooves 16 may be formed by polishing the main body 11 with a columnar grinding stone. The grinding stone is arranged so that its vertical axis through its radial center may be parallel to with the axis through the radial center of the main body 11. The grinding stone is rotated about its vertical axis while simultaneously rotating the base metal 10 about the center axis of the main body 11. For example, in the top view, the grinding stone may be arranged on the main body 11 such that the outer periphery of the grinding stone passes through the center of the main body 11. The grinding stone is rotated about its axis such that the outer periphery of the grinding stone polishes the main body 11. Consequently, either one of the first groove 15 or second groove 16 is formed, or both grooves may be simultaneously formed. The first grooves 15 and the second grooves 16 are formed to have a circular-arc shape with substantially the same radius curvature, and thus may be formed by the grinding stone in opposite directions. The main body 11 is rotated by a predetermined amount of angle about the axis through its radial center, while the grinding stone is rotated about its vertical axis to newly form the first grooves 15 and/or the second grooves 16. In this way, the plurality of the first grooves 15 and the plurality of the second grooves 16 are formed at predetermined intervals with curvature in the opposite directions.

As shown in FIGS. 1 and 2, an outer peripheral region 17 on the main body 11 is subjected to a process such as blast processing, or buff polishing along the entire circumference of the blade 1, in addition to the polishing described above. With this process, the height of projecting portions of surface irregularities which may be present on the outer peripheral region 17 may be aligned. Accordingly, the roughness level of the surface of outer peripheral region 17 can be reduced. Therefore, the surface roughness level of the main body 11 can thereby be adjusted by processing the surface in the outer peripheral region 17.

As shown in FIGS. 1 and 2, a plurality of meandering damping slots 18 are provided in the main body 11. The damping slots 18 are formed by laser beams at the intersection of the outer peripheral region 17 with the disc shaped main body 11a of the main body 11, and the slots 18 are filled with resin. By providing the damping slots 18, the vibration of the base metal 10 may be suppressed. Consequently, noise generated during the cutting process may be reduced by suppressing the vibration of the base metal 10. Further, reduced vibration means that the accuracy of the process on the cut face of the workpiece may be improved. Further, the lifetime of the tipped saw blade 1 can be extended.

The portions of the tipped saw blade 1 that come into contact with the cut face during the cutting operation, are mainly the rake faces 21, the right side face 11a and the left side face 11b of the main body 11. Therefore, the cutting resistance of the workpiece may significantly differ depending on the friction coefficient of the rake faces 21 with respect to the cut face and the friction coefficient of the main body 11 with respect to the cut face of the workpiece. The present inventors have studied the surface properties of the rake faces 21 and the main body 11 in view of the tribological analyses to reduce the friction coefficient of the rake faces 21 and the main body 11 with respect to the cut face of the workpiece. According to the tribological analyses, the friction coefficient of the main body 11 with respect to the workpiece is lower, and the surface roughness is rougher, than a main body processed by the conventionally adopted mirror finishing. In order to optimize the surface property such that the friction coefficient of the rake faces 21 and the main body 11 is reduced, comparative tests were conducted on PCD tipped saw blades having different surface properties on the rake faces 21 and the main body 11. Hereinafter, examples of the tests will be described.

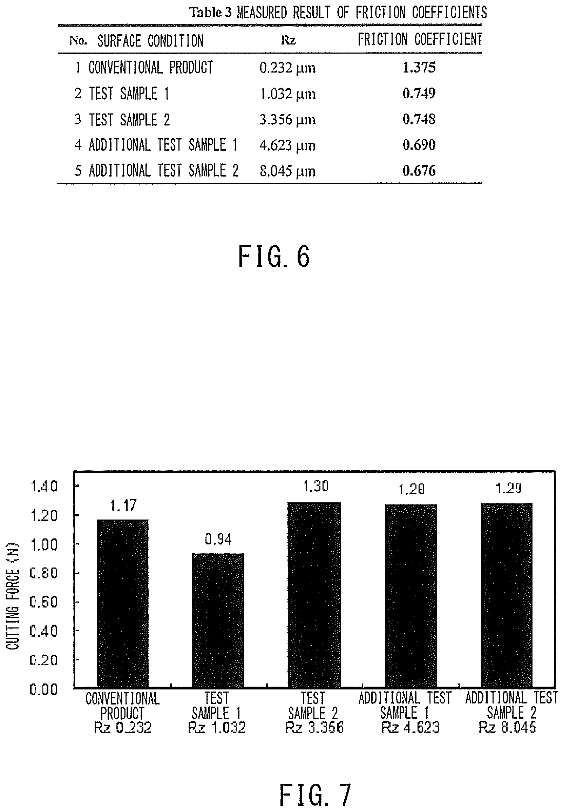

For one test, PCD tipped saw blades having rake faces 21 with different surface roughness Rz are prepared. The PCD tipped saw blades include a plurality of cutting tips 20, wherein the cutting tips 20 provided to the same tipped saw blade have corresponding rake faces 21 having the same surface roughness Rz. As shown in FIG. 6, a conventional product and a plurality of test samples are prepared as the PCD tipped saw blades, with each blade having corresponding rake faces 21 with different surface roughness Rz. A friction abrasion tester was used for measuring the friction coefficient. A urethane rubber ball having a diameter of 5 mm was used as an indenter, and the measurements were carried out under the condition of a load of 100 g and a friction speed of 150 mm/sec.

As a result of the test, as shown in FIG. 6, the surface roughness Rz of the rake faces 21 of test sample 1 were about 4.4 times greater than that of a conventional product. The friction coefficient of the rake faces 21 of the test sample 1 was reduced by about 46%, compared to that of the conventional product. The surface roughness Rz of the test sample 2 was about 14.5 times greater than that of a conventional product. The resulting friction coefficient of the rake faces 21 of the test sample 2 was reduced by about 46% compared to that of the conventional product. The additional test sample 1 had a surface roughness Rz of about 19.9 times greater than that of the conventional product. The resulting friction coefficient of the rake faces 21 of the additional sample 1 was reduced by about 50% compared to that of the conventional product. An additional test sample 2 had a surface roughness Rz of about 34.7 times greater than that of the conventional product. The resulting friction coefficient of the rake faces 21 of the additional test sample 2 was reduced by about 51% compared to that of the conventional product. The trend found was that the friction coefficient tends to be reduced when the surface roughness of the rake faces 21 is increased. Further, a threshold discovery was also made, where it was found that the friction coefficient does not significantly get reduced further than that of the test sample 1 even when Rz is increased to be rougher than 1.032 µm.

Subsequently, cutting forces were measured when cutting the workpiece by the PCD tipped saw blades shown in FIG. 6. A four-component piezoelectric dynamometer was used for measuring the cutting forces. The measurements were performed with the tipped saw blades having the outer diameter of 120 mm, a thickness of tooth of 5 mm, and with 10 as the number of total teeth. The cutting requirements have been determined with the feed speed of 3m/min., the number of rotation of 7000 rpm, in up-cutting, with the saw blade projection of 7 mm. A siding board of 90×70×15 mm was used as the workpiece.

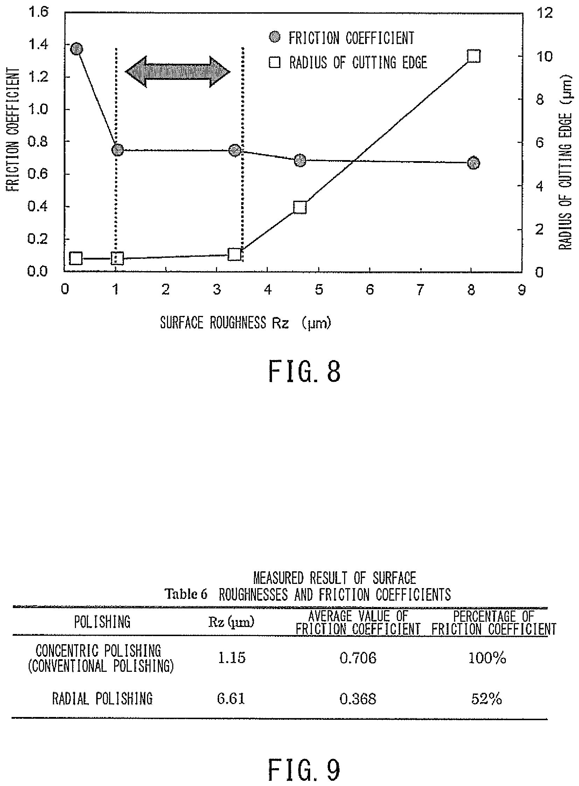

As a result of the test, as shown in Fig.7 the cutting force of the test sample 1, having surface roughness Rz of the rake faces 21 of about 4.4 times greater than that of a conventional product, was reduced by about 20% compared to the cutting force of the conventional product. On the other hand, the cutting force of the test sample 2, the additional test sample 1 and the additional test sample 2, each having greater surface roughness Rz than that of the conventional product and test sample 1, was increased compared to the conventional product. Referring to FIG. 4, when the surface roughness of the rake faces 21 is increased, increased irregularities form on the cutting edges 23, which are formed at the intersection between the rake faces 21 and the flank faces 22. Namely, as a result of the irregularities, the radius of the cutting edges 23 is increased. It is, therefore, considered in this case that the condition of the cutting edges 23 of the cutting tips 20 has deteriorated. As shown in FIG. 8, for the test sample 1 and the test sample 2, the radius of the cutting edges 23 is substantially the same as that of the conventional product. On the other hand, for the additional test sample 1 and the additional test sample 2, with a progressively greater degree of surface roughness, the radius of the cutting edges 23 were larger than that of the conventional product.

As shown in FIG. 8, considering the friction coefficient of the rake faces 21 and the cutting forces (or radius of the cutting edges), it is understood that the test sample 1 is the optimum that has the surface roughness Rz of the rake faces 21 of 1.032 µm. It is understood that the surface roughness Rz of the rake faces 21 is according to the invention equal to 1 to 3.4 µm to maintain an optimum corresponding range for the cutting radius.

As one of the other tests, PCD tipped saw blades having different polishing traces on the main body 11 were prepared to confirm the friction coefficient of each of the PCD tipped saw blades. The conventional polishing traces, for example, were concentrically formed on the main body 11. The main body 11 with the concentrically formed grooves includes a portion successively in contact with the cut face of the workpiece during cutting operation of the workpiece. On the other hand, the main body 11 formed with radially extending grooves intersecting with each other, is distanced at its grooves from the cut face of the workpiece during cutting operation of the workpiece. Therefore, the cut face does not successively come in contact with the main body 11. Consequently, the friction coefficient of the main body 11 with respect to the workpiece can be reduced compared with the conventional polishing. In this way, the resin and/or saw dust (chips) that are adhere to the main body 11 may also be reduced. This beneficial effect has also been studied in the test.

For the test shown in FIG 9, a conventionally, concentrically polished base metal 10 was prepared. The conventional base metal 10 was formed with concentric polishing traces on the main body 11. In comparison, as the present embodiment, the base metal 10 was polished such that radial polishing traces formed on the main body 11 were prepared. The polishing traces included a plurality of the first grooves 15 and the second grooves 16 as shown in FIGS. 2 and 3, intersecting each other in oppositely curving directions relative to the radial direction from the radial center of the blade 1 to the corresponding rake face 21 to which the directions extend. An outer peripheral area of the main body 11 was determined as an average value of the friction coefficient shown in FIG. 9 by being polished. A friction tester was used for measuring the friction coefficient of the outer peripheral area. An urethane rubber ball having the diameter of 5 mm was used as an indenter and measured under the condition of a friction speed of 290 mm/sec.

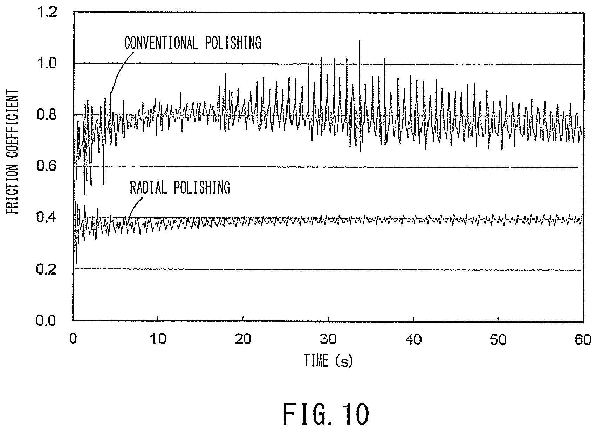

As shown in FIG. 9, the surface roughness Rz of the main body 11 subjected to radial polishing was about 5.7 times greater than that of the main body 11 subjected to the conventional polishing. The friction coefficient of the main body 11 subjected to the radial polishing was reduced by about 48% at the average valued comparing to the case where subjected to the conventional polishing. As shown in FIG. 10, comparing the temporal change in friction coefficient values of each main body 11 while the workpiece was cut by the each main body 11, the change in the friction coefficients of the main body 11 with the radial polishing was smaller and more consistent and stable than that of the main body 11 with the conventional polishing, which varied widely in comparison.

A similar test was also carried out on tipped saw blades 1 having different surface roughness Rz of the main bodies 11 than the blade used in FIG. 9. As a result, the friction coefficients of the main bodies 11 are determined in the range of 0.4 to 0.5 when the surface roughness Rz of the main bodies 11 varies from 3 to 15µm, where the friction coefficients are thus reduced by about 30% to 40% from conventional polishing. In contrast, when the surface roughness Rz of the main bodies 11 was less than 3 µm, it was found that the friction coefficients of the main bodies 11 abruptly increased such that the friction coefficients of the main bodies 11 were brought to be about 0.65 when the surface roughness Rz of the main bodies 11 were about 1 µm. When the surface roughness Rz of the main bodies 11 is more than 15 µm, the flatness of the right side face 11a and the left side face 11b becomes large, therefore, they are determined as outside of the allowable range. In view of the above, it was found that the ideal surface roughness Rz of the main body 11 was preferably equal to 3 to 15 µm to achieve an optimal range of corresponding friction coefficient values.

In one of the other tests, the tipped saw blades 1 were used under the same cutting conditions as that of the conventional product of the PCD tipped saw blade. The surface conditions after use of the different blades were observed. Tipped saw blades 1 having the same diameter of 350 mm, the thickness of tooth of 4.0 mm, the thickness of the base metal of 2.8 mm and the number of teeth of 72 as the conventional PCD product were used. The cutting conditions were also the same as those of the conventional product in which the tipped saw blades 1 were mounted on the same running saw and carried out under the lower shaft up-cutting (with the rotational axis below the cut face with the cutting edges oriented upward) at a feed-speed of 34.8 m/min, at a number of rotations per minute of 4720 rpm, with a flange diameter of 139 mm. A particleboard and a plywood having a thickness of 24 mm were used as a workpiece.

As a result of the test, in terms of durability, the tipped saw blade 1 could be used for 20 days, while the conventional product needed replacement in 13 days. A critical timing in terms of replacement of the PCD tipped saw blade was determined as when the workpiece is chipped (or nicked) due to an excessive increase in cutting resistance or the like. Burning on the surface of the tipped saw blade 1 due to rubbing with the workpiece occurred at substantially the same stage as the conventional product. However, the cutting performance of the tipped saw blade 1 could be maintained longer. Consequently, it has been seen that these results were obtained because the amount of resin adherence to the rake faces 21 and/or the main body 11 was reduced and the quality of the surface conditions of the rake faces 21 and the main body 11 could be maintained at a higher level than that of the conventional product.

As described above, the tipped saw blade 1 includes a plurality of first grooves 15 and second grooves 16 extending radially outward in a curved manner on a right side face 11a and a left side face 11a which both define the circular surfaces of the base metal 10. Therefore, when the workpiece is cut while the tipped saw blade 1 is rotated about its radial center, due to the curved radially outward extending nature of the oppositely facing grooves, the cut face of the workpiece may be distanced from the first and second grooves 15 and 16 such that the cut face does not continuously come in contact with the right and left side faces 11a and 11b. Thus, the friction coefficient of the main body 11 with respect to the workpiece, as well as the degree of resin and saw dust (chips) adherence to the main body 11, can be reduced. In addition, the first and second grooves 15 and 16 extend radially and in a curved manner. As a result, the first and second grooves 15 and 16 are not directed toward the workpiece in a direction orthogonal to the rotation direction, more specifically, at least the entire length of the first and second grooves 15 and 16 are not directed toward the workpiece in the orthogonal direction at one time, but rather are directed toward the workpiece in a curved manner. As a result, the tipped saw blade 1 may receive the force from the cut face evenly distributed in a circumferential direction.

During cutting operation of a workpiece, since the workpiece has elasticity, cutting resistance is increased as the base metal 10 is clamped between the left and right faces of the cut portion of the workpiece. The right side face 11a and the left side face 11b of the tipped saw blade 1 have contacting areas which come in contact with the cut face of the workpiece. Thus, these contacting areas are reduced by providing both the first and second grooves 15 and 16 in the configuration of the present disclosure. Therefore, the force exerted by the workpiece to clamp the base metal 10 is reduced. As a result, the overall cutting resistance can be reduced.

According to the invention, each cutting tip 20 includes a rake face 21 that has a surface roughness Rz equal to 1 to 3.4 µm, as described above, which is rougher compared to the surface of the conventional blade. Accordingly, the friction coefficient of the rake faces 21 with respect to the workpiece can be reduced, while maintaining a relatively low radius of the cutting edge. Consequently, the cutting resistance of the rake faces 21 as well as the degree of resin and/or the saw dust adherence to the rake faces 21 may be reduced. As a result, the overall lifetime of the tipped saw blade 1 can be extended.

Further, as described above, the tipped saw blade 1 includes the base metal 10 having the surface roughness of Rz equal to 3 to 15µm and provided with a plurality of first grooves 15 and second grooves 16 on the right side face 11a and the left side face 11b which define the circular surfaces of the base metal 10. The first grooves 15 are formed in a circular-arc with its center positioned on one side in a circumferential direction of the base metal 10. The second grooves 16 are formed in a circular-arc with its center positioned on the other side in a circumferential direction of the base metal 10, and intersecting the first grooves 15, such that the first and second grooves 15 and 16 are opposite to each other about the radial direction extending from the radial center of the base metal 10 toward the rake face 21 to which the grooves extend. Therefore, as a result of this opposite facing configuration of the grooves 15 and 16, the area of the cut faces of the workpiece coming in contact with the right side face 11a and the left side face 11b of the blade 1 is significantly reduced. As a result, the friction coefficient of the right side face 11a and the left side face 11b with respect to the workpiece can be reduced. Moreover, since the centers of the circular-arcs formed with the first grooves 15 and the second grooves 16 are located in opposite locations in the circumferential direction with respect to a diametrical line through the center of the blade, the first grooves 15 and the second grooves 16 are curved respectively in opposite directions in the circumferential direction. Therefore, the tipped saw blade 1 may be provided with the similar first grooves 15 and second grooves 16 formed, for example, on the right side face 11a and the left side face 11b. Alternatively, even when the rotational direction is reversed, the similar groove effect may be achieved. In this way, the directivity of the tipped saw blade 1 can be prevented, and its beneficial effects are directional-orientation independent. Furthermore, since both the first and second grooves 15 and 16 are formed in a circular-arc shape, they can be formed with a disc-shaped grinding stone, respectively. By this way, the first and second grooves 15 and 16 can be easily formed with the same stone, e.g. in opposite directions.

The radial polishing traces (grooves) are formed in a curved manner in accordance with the radius of curvature of the outer periphery of the grinding stone. When the polishing traces formed on the main body of the base metal curve in one direction and no polishing traces are formed in the other direction opposing to the one direction, the friction coefficients of the main body are significantly different in the direction along the direction in which the polishing traces curve and in the direction opposing to the direction in which the polishing traces curve. Therefore, the abrasion behavior of the main body of the base metal with respect to the cut faces of the workpiece may be different in accordance with the combination of the curved direction of the polishing traces and the rotational direction of the tipped saw blade 1. The first grooves 15 and the second grooves 16 in the tipped saw blade 1 are similarly formed on both of the right side face 11a and the left side face 11b. Further, although the directions of the curves of the first grooves 15 and the second grooves 16 are opposite, the curvature of the curves are the same. Therefore, the abrasion behaviors of the right side face 11a and the left side face 11b with respect to the cut faces of the workpiece will be substantially the same on the left and right sides. Therefore, the abrasion behaviors of the right side face 11a and the left side face 11b are not affected by the rotation direction of the tipped saw blade 1, therefore maintaining a constant frictional coefficient over the body of the blade. In particular, the cutting performance on the right side and the left side toward the cutting proceeding direction of the tipped saw blade 1 becomes equivalent so that straight cutting is facilitated.

Further, the cutting tips 20 bonded to the tipped saw blade 1 are made of sintered polycrystalline diamond (PCD). Therefore, the cutting tips 20 exhibit high wear resistance and the cutting edges 23 are also more resistant to wear. As a result, the lifetime of the tipped saw blade 1 can be extended. In addition, since the rake face 1 is made to have optimum surface properties as described above, the degree of resin adherence is lowered significantly. Thus, the lifetime of the tipped saw blade 1 can be extended due to these multiple synergistic effects.

Various modification may be made to the tipped saw blade 1 according to the aforementioned present embodiments. For example, but not according to the invention the first grooves 15 and the second grooves 16 may be provided as grooves that do not substantially curve from the radial direction, but may curve from another source point. The cutting tips 20 are not limited to the sintered polycrystalline diamond (PCD) but, for example, the tips made of only cemented carbide may be used. The tipped saw blade 1 may be applied not only to workpieces such as woods, but also wooden boards such as a particleboard or a MDF, or ceramic materials , or metal members such as aluminum or steel may also be used as workpieces.

The various examples described above in detail with reference to the attached drawings are intended to be representative of the present disclosure and are thus non limiting embodiments. The detailed description is intended to teach a person of skill in the art to make, use and/or practice various aspects of the present teachings and thus does not limit the scope of the disclosure in any manner. Furthermore, each of the additional features and teachings disclosed above may be applied and/or used separately or with other features and teachings in any combination thereof, to provide a tipped saw blade as defined by the claims.

## Claims

1. A tipped saw blade (1) comprising:
a disc-shaped base metal (10); and
a plurality of cutting tips (20) that are joined around an outer periphery of the base metal (10),
wherein the base metal (10) includes a plurality of grooves (15, 16) extending on its surface radially in a curved manner, **characterized in that** each of the cutting tips (20) include a rake face (21) that has a surface roughness Rz of 1 to 3.4 µm.

2. The tipped saw blade (1) of claim 1, wherein the plurality of grooves (15, 16) includes circular-arc first grooves (15) with their center located on one side of the circumferential direction of the base metal (10) with respect to a radial line of the base metal (10), and circular-arcs second grooves (16) with their center located on another side with respect to a radial line of the base metal (10) of the base metal (10), and wherein the first grooves (15) and the second grooves (16) intersect with each other; and
wherein the base metal (10) has a surface roughness Rz of 3 to 15µm.

3. The tipped saw blade (1) of claim 1 or 2, wherein the plurality of cutting tips (20) are made of sintered polycrystalline diamond (PCD).

## Patentansprüche

1. Sägeblatt (1) mit Schneidspitzen, aufweisend:
ein scheibenförmiges Basismetall (10); und
eine Mehrzahl von Schneidspitzen (20), die um einen Außenumfang des Basismetalls (10) zusammengefügt sind, wobei das Basismetall (10) eine Mehrzahl von Nuten (15, 16) aufweist, die sich radial auf seiner Oberfläche in einer gekrümmten Weise erstrecken, **dadurch gekennzeichnet, dass**
jede der Schneidspitzen (20) eine Spanfläche (21) aufweist, die eine Oberflächenrauigkeit Rz von 1 bis 3,4 µm hat.

2. Sägeblatt (1) mit Schneidspitzen nach Anspruch 1, wobei die Mehrzahl von Nuten (15, 16) kreisbogenförmige erste Nuten (15), deren Mitte sich auf einer Seite der Umfangsrichtung des Basismetalls (10) bezüglich einer radialen Linie des Basismetalls (10) befindet, und kreisbogenförmige zweite Nuten (16), deren Mitte sich auf einer anderen Seite bezüglich einer radialen Linie des Basismetalls (10) des Basismetalls (10) befindet beinhalten, und wobei sich die ersten Nuten (15) und die zweiten Nuten (16) schneiden; und
wobei das Basismetall (10) eine Oberflächenrauigkeit Rz von 3 bis 15 µm hat.

3. Sägeblatt (1) mit Schneidspitzen nach Anspruch 1 oder 2, wobei die Mehrzahl von Schneidspitzen (20) aus gesintertem polykristallinen Diamant bestehen.

## Revendications

1. Lame de scie à dents (1), comprenant :
un métal de base en forme de disque (10) ; et
une pluralité de dents de coupe (20) qui sont réunies autour d'une périphérie extérieure du métal de base (10),
le métal de base (10) comportant une pluralité de rainures (15, 16) s'étendant radialement sur sa surface sous forme courbe, **caractérisée en ce que** chacune des dents de coupe (20) comporte une face de dégagement (21) qui présente une rugosité de surface Rz de 1 à 3,4 µm.

2. Lame de scie à dents (1) selon la revendication 1, dans laquelle la pluralité de rainures (15, 16) comportent des premières rainures en arcs circulaires (15) avec leur centre situé sur un côté de la direction circonférentielle du métal de base (10) par rapport à une ligne radiale du métal de base (10), et des deuxièmes rainures en arcs circulaires (16) avec leur centre situé sur un autre côté par rapport à une ligne radiale du métal de base (10) du métal de base (10), et dans laquelle les premières rainures (15) et les deuxièmes rainures (16) s'intersectent ; et
dans laquelle le métal de base (10) a une rugosité de surface Rz de 3 à 15 µm.

3. Lame de scie à dents (1) selon la revendication 1 ou 2, dans laquelle à la pluralité de dents de coupe (20) sont fabriquées à partir de diamant polycristallin fritté (PCD).
